# EUROPEAN PATENT APPLICATION

(11) **EP 4 557 333 A1**
(43) Date of publication of application: **21.05.2025**
(21) Application number: 24207501.8
(22) Date of filing: 18.10.2024
(51) Int. Cl.: H01G 4/12, H01G 4/224, H01G 4/30, C04B 35/465, C04B 35/468

(54) **MULTILAYER CERAMIC CAPACITOR**

(30) Priority: 15.11.2023 KR 20230158382
(71) Applicant: Samsung Electro-Mechanics Co., Ltd., Gyeonggi-do (KR)
(72) Inventor: Park, Jung Jin, Suwon-si, Gyeonggi-do (KR); Choi, Ho Sam, Suwon-si, Gyeonggi-do (KR); Shim, Dae Jin, Suwon-si, Gyeonggi-do (KR); Choi, Hyo Sung, Suwon-si, Gyeonggi-do (KR); Lee, Seung Yong, Suwon-si, Gyeonggi-do (KR); Lee, Yong Hwa, Suwon-si, Gyeonggi-do (KR); Shin, Jin Bok, Suwon-si, Gyeonggi-do (KR); Kim, Hyo Sub, Suwon-si, Gyeonggi-do (KR); Jung, Dong Jun, Suwon-si, Gyeonggi-do (KR); Lee, Jong Ho, Suwon-si, Gyeonggi-do (KR)
(74) Representative: Grünecker Patent- und Rechtsanwälte PartG mbB

(57) **Abstract**

A multilayer electronic component includes: a body including a capacitance formation portion including a dielectric layer and internal electrodes alternately disposed with the dielectric layer in a first direction, and a cover portion disposed on upper and bottom surfaces of the capacitance formation portion in the first direction; and an external electrode disposed on the body, and the cover portion may include titanium (Ti), gallium (Ga), and phosphorus (P), and a molar amount of gallium (Ga) with respect to 100 moles of titanium (Ti) included in the cover portion may be 0.3 moles or more and 6.0 moles or less.

## Description

### CROSS-REFERENCE TO RELATED APPLICATION(S)

This application claims benefit of priority to Korean Patent Application No. 10-2023-0158382 filed on November 15, 2023, in the Korean Intellectual Property Office, the disclosure of which is incorporated herein by reference in its entirety.

### TECHNICAL FIELD

The present disclosure relates to a multilayer electronic component.

A multilayer ceramic capacitor (MLCC), a multilayer electronic component, is a chip-type condenser, mounted on the printed circuit boards of various types of electronic product, such as image display devices including a liquid crystal display (LCD) and a plasma display panel (PDP), computers, smartphones and mobile phones, and serves to charge or discharge electricity therein or therefrom.

The multilayer ceramic capacitor may be used as a component in various electronic devices due to having a small size, ensuring high capacitance and being easily mounted. With the miniaturization and implementation of high output power of various electronic devices such as computers and mobile devices, demand for miniaturization and high capacitance of multilayer ceramic capacitors has also been increasing.

As the miniaturization and the implementation of higher capacitance progress, the need to protect a capacitance formation region has increased, but this has been improved by adding a margin region surrounding the capacitance formation region. However, as a structural design continues to change to achieve the miniaturization and the high capacitance, the capacitance formation region may increase and the margin region protecting the capacitance formation region may decrease, and accordingly, there may be a risk that the moisture resistance reliability and strength of a multilayer ceramic capacitor may be decreased.

### SUMMARY

An aspect of the present disclosure is to provide a multilayer electronic component having excellent thermal resistance in a high temperature and moisture environment by improving the densification of a cover portion.

An aspect of the present disclosure is to provide a multilayer electronic component having improved moisture resistance and reliability.

However, the aspects of the present disclosure are not limited to the above-described contents, and may be more easily understood in the process of describing specific example embodiments of the present disclosure.

A multilayer electronic component according to some example embodiments of the present disclosure may include: a body including a capacitance formation portion including a dielectric layer and internal electrodes alternately disposed with the dielectric layer in a first direction, and a cover portion disposed on both end surfaces of the capacitance formation portion in the first direction; and an external electrode disposed on the body, and the cover portion may include titanium (Ti), gallium (Ga), and phosphorus (P), and a molar amount of gallium (Ga) with respect to 100 moles of titanium (Ti) included in the cover portion may be 0.3 moles or more and 6.0 moles or less.

A multilayer electronic component according to another example embodiments of the present disclosure may include: a body including a capacitance formation portion including a dielectric layer and internal electrodes alternately disposed with the dielectric layer in a first direction, and a cover portion disposed on both end surfaces of the capacitance formation portion in the first direction; and an external electrode disposed on the body, and the cover portion may include titanium (Ti), gallium (Ga), and phosphorus (P), and a molar amount of phosphorus (P) with respect to 100 moles of titanium (Ti) included in the cover portion may be more than 0 mole and 5.0 moles or less.

One of the various effects of the present disclosure may be to improve the thermal resistance of a multilayer electronic component in a high temperature and humidity environment by the densification of the cover portion.

One of the various effects of the present disclosure may be to improve the moisture resistance reliability of a multilayer electronic component.

However, advantages and effects of the present application are not limited to the foregoing content and may be more easily understood in the process of describing a specific example embodiment of the present disclosure.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a multilayer electronic component according to an example embodiment of the present disclosure;
FIG. 2 schematically illustrates an exploded perspective view illustrating a stack structure of internal electrodes;
FIG. 3 is a schematic cross-sectional view taken along line I-I' of FIG. 1;
FIG. 4 is a schematic cross-sectional view taken along line II-II' of FIG. 1;
FIG. 5A is an image of a cross-section of a cover portion of Comparative Example captured in a HAADF mode of a transmission electron microscope (TEM), FIG. 5B is an image obtained by mapping an aluminum (Al) element by performing EDS analysis in a region of FIG. 5A, and FIG. 5C is an image obtained by mapping a silicon (Si) element by performing the EDS analysis in the region of FIG. 5A;
FIG. 6A is an image of a cross part of a cover portion of Inventive Example captured in a HAADF mode of a transmission electron microscope (TEM), FIG. 6B is an image obtained by mapping an aluminum (Al) element by performing EDS analysis in a region of FIG. 6A, FIG. 6C is an image obtained by mapping a silicon (Si) element by performing EDS analysis in the region of FIG. 6A, and FIG. 6D is an image obtained by mapping a gallium (Ga) element by performing EDS analysis in the region of FIG. 6A;
FIG. 7 is an image in which a cross-section of a cover portion of Inventive Example is captured with a transmission electron microscope (TEM), and then EDS analysis is performed to map a phosphorus (P) element;
FIG. 8A is a moisture resistance reliability evaluation graph of Comparative Example, and FIG. 8B is a moisture resistance reliability evaluation graph of Inventive Example; and
FIG. 9A is a reliability (MTTF) evaluation graph under harsh conditions of Comparative Example, and FIG. 9B is a reliability (MTTF) evaluation graph under harsh conditions of Inventive Example.

### DETAILED DESCRIPTION

Hereinafter, example embodiments of the present disclosure will be described with reference to specific example embodiments and the attached drawings. The example embodiments of the present disclosure may, however, be exemplified in many different forms and should not be construed as being limited to the specific embodiments set forth herein. The example embodiments disclosed herein are provided for those skilled in the art to better explain the present disclosure. Therefore, in the drawings, the shapes and dimensions of elements may be exaggerated for clarity, and the same reference numerals will be used throughout to designate the same or like elements.

In addition, in order to clearly describe the present disclosure in the drawings, the contents unrelated to the description are omitted, and since sizes and thicknesses of each component illustrated in the drawings are arbitrarily illustrated for convenience of description, the present disclosure is not limited thereto. In addition, components with the same function within the same range of ideas are described using the same reference numerals. Throughout the specification, when a certain portion "includes" or "comprises" a certain component, this indicates that other components are not excluded and may be further included unless otherwise noted.

In the drawings, a first direction may be defined as a thickness T direction, a second direction may be defined as a length L direction, and a third direction may be defined as a width W direction.

### Multilayer Electronic Component

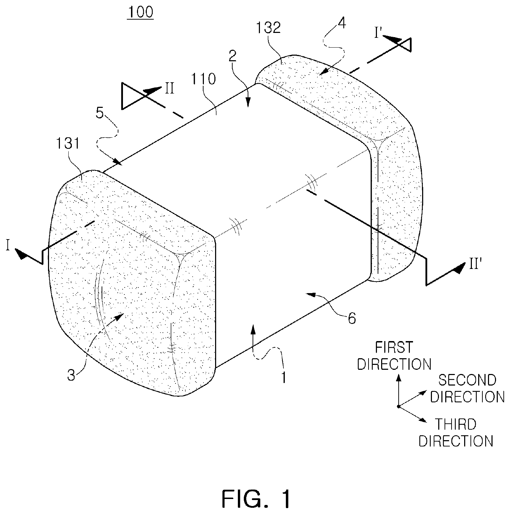

FIG. 1 is a perspective view schematically illustrating a multilayer electronic component according to an example embodiment of the present disclosure.

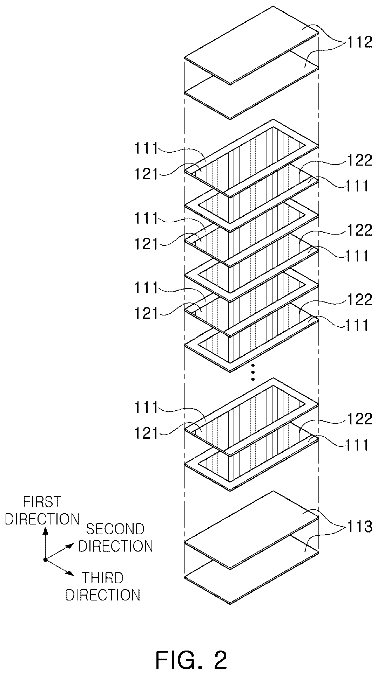

FIG. 2 schematically illustrates an exploded perspective view illustrating a stack structure of internal electrodes.

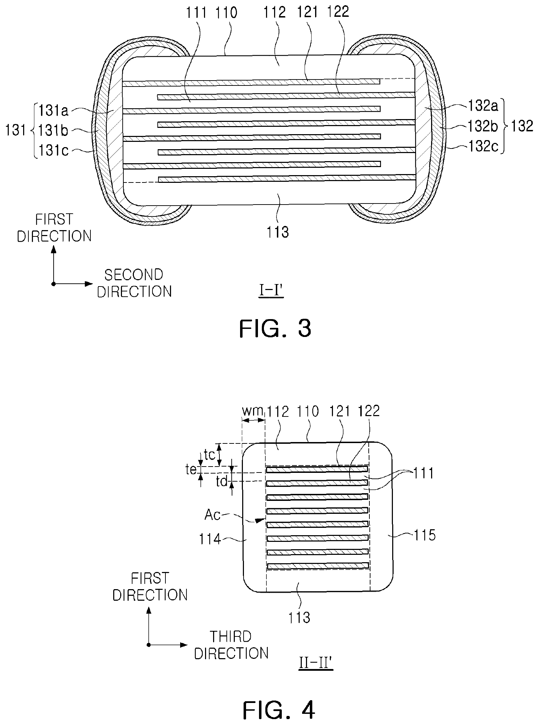

FIG. 3 is a schematic cross-sectional view taken along line I-I' of FIG. 1.

FIG. 4 is a schematic cross-sectional view taken along line II-II' of FIG. 1.

Hereinafter, a multilayer electronic component according to an example embodiment of the present disclosure will be described in detail with reference to FIGS. 1 to 4. However, as an example of a multilayer electronic component, a multilayer ceramic capacitor will be described, but the multilayer electronic component of the present disclosure may also be applied to various electronic products using dielectric compositions, such as inductors, piezoelectric elements, varistors, or thermistors.

A multilayer electronic component 100 according to some example embodiments of the present disclosure may include a body 110 including a capacitance formation portion Ac including a dielectric layer 111 and internal electrodes 121 and 122 alternately disposed with the dielectric layer 111 in a first direction, and cover portions 112 and 113 disposed on both end-surfaces of the capacitance formation portion Ac in the first direction; and external electrodes 131 and 132 disposed on the body 110, and the cover portions 112 and 113 may include titanium (Ti), gallium (Ga), and phosphorus (P), and a molar amount of gallium (Ga) with respect to 100 moles of titanium (Ti) included in the cover portions 112 and 113 may be 0.3 moles or more and 6.0 moles or less.

A multilayer electronic component 100 according to another example embodiments of the present disclosure may include: a body 110 including a capacitance formation portion Ac including a dielectric layer 111 and internal electrodes 121 and 122 alternately disposed with the dielectric layer 111 in a first direction, and cover portions 112 and 113 disposed on both end-surfaces of the capacitance formation portion Ac in the first direction; and external electrodes 131 and 132 disposed on the body 110, and the cover portions 112 and 113 may include titanium (Ti), gallium (Ga), and phosphorus (P), and a molar amount of phosphorus (P) with respect to 100 moles of titanium (Ti) included in the cover portions 112 and 113 may be more than 0 mole and 5.0 moles or less.

Hereinafter, various embodiments of the present disclosure will be described in more detail.

The body 110 may include dielectric layers 111 and internal electrodes 121 and 122 alternately stacked.

More specifically, the body 110 may include a capacitance formation portion Ac disposed inside the body 110, and including first internal electrodes 121 and second internal electrodes 122 alternately arranged to face each other with the dielectric layer 111 interposed therebetween to form capacitance.

There is no particular limitation on the specific shape of the body 110, but as illustrated, the body 110 may have a hexahedral shape or a shape similar thereto. Due to contraction of ceramic powder particles included in the body 110 during a sintering process, the body 110 may not have a hexahedral shape with entirely straight lines, but may have a substantially hexahedral shape.

The body 110 may have first and second surfaces 1 and 2 opposing each other in the first direction, third and fourth surfaces 3 and 4 connected to the first and second surfaces 1 and 2 and opposing each other in the second direction, and fifth and sixth surfaces 5 and 6 connected to the first to fourth surfaces 1, 2, 3 and 4 and opposing each other in the third direction.

In a state in which a plurality of dielectric layers 111 included in the body 110 are sintered, boundaries between adjacent dielectric layers 111 may be integrated so as to be difficult to identify without using a scanning electron microscope (SEM).

The materials included in the dielectric layer 111 is not limited as long as sufficient electrostatic capacity may be obtained therewith. In general, the dielectric layer 111 may include a perovskite (ABO₃)-based material, for example, a barium titanate-based material, a lead composite perovskite-based material, or a strontium titanate-based material. The barium titanate-based material may include BaTiO₃-based ceramic particles, and examples of the ceramic particles may include BaTiO₃, (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1) or Ba(Ti_{1-y}Zr_{y})O₃ (0<y<1), which may be formed by partially employing calcium (Ca) and zirconium (Zr) in BaTiO₃.

Additionally, as materials included in the dielectric layer 111, various ceramic additives, organic solvents, binders, dispersants, and the like, may be added to particles such as barium titanate (BaTiO₃) according to the purpose of the present disclosure.

Additionally, the dielectric layer 111 may be formed by using a dielectric material such as barium titanate (BaTiO₃), and thus may include a dielectric microstructure after sintering. The dielectric microstructure may include a plurality of grains, grain boundaries disposed between the adjacent grains, and a triple point disposed at a point at which three or more grain boundaries are in contact with each other, each of which may be included more than one of them.

In the present disclosure, in order to identify dielectric layers included in the cover portions 112 and 113 and the side margin portions 114 and 115, which will be described below, a dielectric layer 111 included in the capacitance formation portion Ac may be defined as a first dielectric layer 111, a dielectric layer included in the cover portions 112 and 113 may be defined as a second dielectric layer, and a dielectric layer included in the side margin portions 114 and 115 may be defined as a third dielectric layer.

In the present disclosure, as some example embodiments of a more specific method of measuring the content of elements included in each component of the multilayer electronic component 100, in the case of destruction method, components may be analyzed using an energy Dispersive X-ray Spectroscopy (EDS) mode of the scanning electron microscopy (SEM, an EDS mode of a transmission electron microscope (TEM), or an EDS mode of a scanning transmission electron microscope (STEM). First, a thinly sliced analysis sample is prepared using a focused ion beam (FIB) device in a region including dielectric microstructures, in cross-sections of a sintered body or a sintered side margin portion. Then, a damaged layer on a surface of the thinly sliced analysis sample is removed using xenon (Xe) or argon (Ar) ion milling, and then, qualitative/quantitative analysis is performed by mapping each component to be measured in an image obtained using SEM-EDS, TEM-EDS, or STEM-EDS. In this case, the qualitative/quantitative analysis graph of each component may be expressed in terms of mass percentage (wt%), atomic percentage (at%), or mole percentage (mol%) of each element. In this case, the qualitative/quantitative analysis graph thereof may be expressed by converting a molar amount of another specific component to a molar amount of a specific component.

Through another method, a chip may be crushed and a region to be measured may be selected, and in a region including the selected dielectric microstructures, the components of the region including the dielectric microstructures may be analyzed using devices such as inductively coupled plasma spectroscopy (ICP-OES) and inductively coupled plasma mass spectrometry (ICP-MS).

In some example embodiments of the present disclosure, the first dielectric layer 111 of the capacitance formation portion Ac may not include gallium (Ga) or phosphorus (P).

Here, the fact that the first dielectric layer 111 of the capacitance formation portion Ac does not include gallium (Ga) or phosphorus (P) may denote that a dielectric slurry or dielectric green sheet state does not include gallium (Ga) or phosphorus (P) before sintering the first dielectric layer 111, or may denote that the first dielectric layer 111 disposed in a center region of the capacitance formation portion Ac does not include gallium (Ga) or phosphorus (P).

That is, as gallium (Ga) or phosphorus (P) included in the second dielectric layer of the cover portions 112 and 113 to be described below undergoes a sintering process such as high-temperature heat treatment, gallium (Ga) or phosphorus (P) may diffuse into a region of the first dielectric layer 111 of the capacitance formation portion Ac adjacent to the cover portions 112 and 113 of the capacitance formation portion Ac, which may denote that gallium (Ga) or phosphorus (P) may not be detected in the first dielectric layer 111 disposed in the center portion of the capacitance formation portion Ac.

For example, based on the first and second directional cross-sections from a third directional center of the body 110, when a 10 µm × 10 um region disposed in the first and second directional center portions is observed in an EDS mode of a scanning electron microscope (SEM) or a transmission electron microscope (TEM), this may denote that gallium (Ga) or phosphorus (P) may not be detected in the corresponding region, or that gallium (Ga) may be detected in an amount of less than 0.5 at% and phosphorus (P) is detected in an amount of less than 0.1 at%.

A thickness td of the dielectric layer 111 is not limited.

In order to ensure reliability in a high voltage environment of the multilayer electronic component 100, the thickness of the dielectric layer 111 may be 10.0 um or less. Additionally, in order to achieve miniaturization and high capacitance of the multilayer electronic component 100, the thickness of the dielectric layer 111 may be 3.0 um or less, and in order to more easily achieve miniaturization and high capacitance, the thickness of the dielectric layer 111 may be 1.0 um or less, preferably 0.6 um or less, and more preferably 0.4 um or less.

Here, the thickness td of the dielectric layer 111 may refer to a thickness td of the dielectric layer 111 disposed between the first and second internal electrodes 121 and 122.

Meanwhile, the thickness td of the dielectric layer 111 may refer to a first directional size of the dielectric layer 111. Additionally, the thickness td of the dielectric layer 111 may refer to an average thickness td of the dielectric layer 111, and may refer to an average size of the dielectric layer 111 in the first direction.

The average thickness of the dielectric layer 111 in the first direction may be measured by scanning first and second directional cross-sections of the body 110 with a scanning electron microscope (SEM) of 10,000X magnification. More specifically, the average thickness of one dielectric layer 111 in the first direction may be an average value calculated by measuring the first directional size of one dielectric layer 111 at 10 points spaced apart from each other at equal intervals in the second direction in the scanned image. The 10 points spaced apart from each other at equal intervals may be designated in the capacitance formation portion Ac. Additionally, when the average value is measured by extending an average value measurement up to 10 dielectric layers 111, an average thickness of the dielectric layers 111 in the first directional may be further generalized

The internal electrodes 121 and 122 may be alternately stacked with the dielectric layer 111.

The internal electrodes 121 and 122 may include a first internal electrode 121 and a second internal electrode 122, and the first and second internal electrodes 121 and 122 may be alternately arranged to face each other with the dielectric layer 111 included in the body 110 interposed therebetween, and may be exposed to the third and fourth surfaces 3 and 4 of the body 110, respectively.

More specifically, the first internal electrode 121 may be spaced apart from the fourth surface 4 and may be exposed through the third surface 3, and the second internal electrode 122 may be spaced apart from the third surface 3 and may be exposed through the fourth surface 4. A first external electrode 131 may be disposed on the third surface 3 of the body 110 and may be connected to the first internal electrode 121, and a second external electrode 132 may be disposed on the fourth surface 4 of the body 110 and may be connected to the second internal electrode 122.

That is, the first internal electrode 121 may be connected to the first external electrode 131 without being connected to the second external electrode 132, and the second internal electrode 122 may be connected to the second external electrode 132 without being connected to the first external electrode 131. In this case, the first and second internal electrodes 121 and 122 may be electrically separated from each other by the dielectric layer 111 disposed therebetween.

Meanwhile, the body 110 may be formed by alternately stacking ceramic green sheets on which the first internal electrode 121 is printed and ceramic green sheets on which the second internal electrode 122 are printed, and then sintering the ceramic green sheets.

The material included in the internal electrodes 121 and 122 is not particularly limited, and any material having excellent electrical conductivity may be used. For example, the internal electrodes 121 and 122 may include one or more selected from the group consisting of nickel (Ni), copper (Cu), palladium (Pd), silver (Ag), gold (Au), platinum (Pt), tin (Sn), tungsten (W), titanium (Ti), and alloys thereof.

Additionally, the internal electrodes 121 and 122 may be formed by printing a conductive paste for internal electrodes including one or more selected from the group consisting of nickel (Ni), copper (Cu), palladium (Pd), silver (Ag), gold (Au), platinum (Pt), tin (Sn), tungsten (W), titanium (Ti) and alloys thereof on a ceramic green sheet. A printing method for the conductive paste for internal electrodes may be a screen printing method or a gravure printing method, but the present disclosure is not limited thereto.

Meanwhile, a thickness te of the internal electrodes 121 and 122 is not limited.

In order to ensure the reliability of the multilayer electronic component 100 in a high voltage environment, the thickness te of the internal electrodes 121 and 122 may be 3.0 um or less. Additionally, in order to achieve miniaturization and high capacitance of the multilayer electronic component 100, the thickness of the internal electrodes 121 and 122 may be 1.0 um or less, and in order to more easily achieve ultra-miniaturization and high capacitance, the thickness of the internal electrodes 121 and 122 may be 0.6 um or less, and more preferably 0.4 um or less.

Here, the thickness te of the internal electrodes 121 and 122 may refer to a first directional size of the internal electrodes 121 and 122. Additionally, the thickness te of the internal electrodes 121 and 122 may refer to an average thickness te of the internal electrodes 121 and 122, and may refer to an average size of the internal electrodes 121 and 122 in the first direction.

The average size of the internal electrodes 121 and 122 in the first direction may be measured by scanning images of the first and second directional cross-sections of the body 110 with a scanning electron microscope (SEM) of 10,000X magnification. More specifically, the average size of one internal electrode in the first direction may be an average value calculated by measuring the first directional size of one internal electrode at 10 points spaced apart from each other at equal intervals in the second direction in the scanned image. The 10 points spaced apart from each other at equal intervals may be designated in the capacitance formation portion Ac. Additionally, when the average value is measured by extending an average value measurement up to 10 internal electrodes, an average thickness of the internal electrode in the first directional may be further generalized.

Meanwhile, in some example embodiments of the present disclosure, the average thickness td of at least one of the plurality of dielectric layers 111 and the average thickness te of at least one of the plurality of internal electrodes 121 and 122 may satisfy 2×te < td.

In other words, the average thickness td of one dielectric layer 111 may be larger than twice the average thickness te of one internal electrode 121 or 122. Preferably, the average thickness td of the plurality of dielectric layers 111 may be larger than twice the average thickness te of the plurality of internal electrodes 121 and 122.

In general, high-voltage electronic components have a major issue due to reliability issues due to a decrease in breakdown voltage (BDV) in a high-voltage environment.

Accordingly, in order to prevent a decrease in the breakdown voltage under a high voltage environment, the average thickness td of the dielectric layer 111 may be made larger than twice the average thickness te of the internal electrodes 121 and 122, so that the thickness of the dielectric layer, which is a distance between internal electrodes, may be increased, thereby improving the breakdown voltage (BDV) characteristics.

When the average thickness td of the dielectric layer 111 is less than or equal to twice the average thickness te of the internal electrodes 121 and 122, an average thickness of the dielectric layer, which is a distance between the internal electrodes, may be thin, which may reduce the breakdown voltage, and a short circuit may occur between the internal electrodes.

Meanwhile, the body 110 may include cover portions 112 and 113 disposed on both end-surfaces (upper and bottom surfaces) of the capacitance formation portion Ac in the first direction.

Specifically, the body 110 may include a first cover portion (upper cover portion) 112 disposed on one surface (upper surface) of the capacitance formation portion Ac in the first direction, and a second cover portion (lower cover portion) 113 disposed on the other surface (bottom surface) of the capacitance formation portion Ac in the first direction, and more specifically, the body 110 may include an upper cover portion 112 disposed above the capacitance formation portion Ac in the first direction, and a lower cover portion 113 disposed below the capacitance formation portion Ac in the first direction.

The first cover portion 112 and the second cover portion 113 may be formed by stacking a single dielectric layer 111 or two or more dielectric layers 111 on upper and lower surfaces of the capacitance formation portion Ac in the first direction, respectively.

As described above, in the present disclosure, the dielectric layer included in the cover portions 112 and 113 may be defined as a second dielectric layer.

The first and second cover portions 112 and 113 may basically serve to prevent damage to the internal electrodes 121 and 122 due to physical or chemical stress.

The first cover portion 112 and the second cover portion 113 do not include the internal electrodes 121 and 122, and may include the same material as the first dielectric layer 111.

That is, the first cover portion 112 and the second cover portion 113 may include a dielectric material, and may include, for example, a dielectric material based on barium titanate (BaTiO₃). Additionally, as materials included in the second dielectric layer, various ceramic additives, organic solvents, binders, dispersants, and the like, may be added to particles such as barium titanate (BaTiO₃) depending on the purpose of the present disclosure.

Additionally, the second dielectric layer included in the first and second cover portions 112 and 113 may be formed using a dielectric material such as barium titanate (BaTiO₃), and thus may include a dielectric microstructure after sintering. The dielectric microstructure may include a plurality of grains, grain boundaries disposed between the adjacent grains, and a triple point disposed at a point at which three or more grain boundaries are in contact with each other, each of which may be included more than one of them. Additionally, the second dielectric layer may include a secondary phase that is not dissolved in the grains.

Meanwhile, the cover portions 112 and 113 may include gallium (Ga).

More specifically, a molar amount of gallium (Ga) with respect to 100 moles of titanium (Ti) included in the cover portions 112 and 113 may be 0.3 moles or more and 6.0 moles or less.

As the cover portions 112 and 113 includes gallium (Ga), a sintering temperature may be lowered to reduce the number of pores, so that the densification of the cover portions 112 and 113 may be improved, thereby improving moisture resistance reliability. Additionally, the generation of cracks may be suppressed even when the cover portions 112 and 113 are subjected to external shocks, and thus the mechanical properties may be improved.

As a molar amount of gallium (Ga) with respect to 100 moles of titanium (Ti) included in the cover portions 112 and 113 satisfies 0.3 moles or more and 6.0 moles or less, a sintering temperature of the cover portions 112 and 113 may be lowered to reduce the number of pores, so that the densification of the cover portions 112 and 113 may be improved, thereby improving moisture resistance reliability. Additionally, the generation of cracks may be suppressed even when the cover portions 112 and 113 are subjected to external shocks, and thus the mechanical properties may be improved.

When a molar amount of gallium (Ga) included in the cover portions 112 and 113 is less than 0.3 moles with respect to 100 moles of titanium (Ti), there may be a risk that reliability may deteriorate due to the grain boundary resistance being deteriorated due to grain growth, or there may be a risk that moisture resistance reliability may be reduced due to insufficient removal of pores.

When a molar amount of gallium (Ga) exceeds 6.0 moles with respect to 100 moles of titanium (Ti) included in the cover portions 112 and 113, excessive addition of gallium (Ga) may reduce the dispersibility in a state of the dielectric slurry to cause agglomerates, which may cause the breakdown voltage (BDV) to decrease or cause the grain growth to be excessively suppressed, resulting in a decrease in densification, and may cause a side effect of lowering moisture resistance reliability.

Additionally, the cover portions 112 and 113 may include phosphorus (P).

More specifically, a molar amount of phosphorus (P) with respect to 100 moles of titanium (Ti) included in the cover portions 112 and 113 may be more than 0 mole and 5.0 moles or less, and an upper limit may be, preferably, 3.0 moles or less, or 1.0 moles or less, and more preferably 0.5 moles or less.

As the cover portions 112 and 113 include phosphorus (P), the number of pores may be reduced, and thus the densification of the cover portions 112 and 113 may be improved, thereby improving moisture resistance reliability. Additionally, the generation of cracks may be suppressed even when the cover portions 112 and 113 are subjected to external shocks, thereby improving the mechanical properties.

The molar amount of phosphorus (P) with respect to 100 moles of titanium (Ti) included in the cover portions 112 and 113 may satisfy more than 0 mole and 5.0 moles or less, thus reducing the number of pores, and thus, the densification of the cover portions 112 and 113 may be improved, thereby improving moisture resistance reliability.

The molar amount of phosphorus (P) with respect to 100 moles of titanium (Ti) included in the cover portions 112 and 113 may be 5.0 moles or more, which may excessively suppress the grain growth and may lead to a decrease in electrical properties such as the breakdown voltage (BDV).

Additionally, as described above, the first and second cover portions 112 and 113 may include a plurality of grains having a core-shell structure, grain boundaries disposed between the adjacent grains, a triple point disposed at a point at which three or more grain boundaries are in contact with each other, and a secondary phase, and at least one of a shell portion of the core-shell structure, the grain boundary, the triple point and the secondary phase, included in the first and second cover portions 112 and 113, may include a region in which the content of phosphorus (P) is less than 0.1 at%.

This may denote that phosphorus (P) is evenly dispersed without agglomerating.

In some example embodiments of the present disclosure, the cover portions 112 and 113 may include, preferably, both gallium (Ga) and phosphorus (P), and in this case, the molar amount of gallium (Ga) with respect to 100 moles of titanium (Ti) included in the cover portions 112 and 113 may be, preferably, 0.3 moles or more and 6.0 moles or less, and the molar amount of phosphorus (P) with respect to 100 moles of titanium (Ti) included in the cover portions 112 and 113 may be, preferably, more than 0 mole and 5.0 moles or less, but the present disclosure is not particularly limited thereto.

Additionally, a ratio (A/B) of the molar amount (A) of barium (Ba) to the molar amount (B) of titanium (Ti) included in the cover portions 112 and 113 may satisfy 0.99 ≤ A/B ≤ 1.05.

A ratio (A/B) of the molar amount (A) of barium (Ba) to the molar amount (B) of titanium (Ti) included in the cover portions 112 and 113 satisfies 0.99 ≤ A/B ≤ 1.05, which may induce uniform grain growth and improve the densification of the dielectric microstructure, thereby improving reliability including moisture resistance reliability.

When a ratio (A/B) of the molar amount (A) of barium (Ba) to the molar amount (B) of titanium (Ti) included in the cover portions 112 and 113 is less than 0.99 (A/B < 0.99), there may be a risk that electrical properties such as breakdown voltage (BDV) may deteriorate due to non-uniform grain growth, and when a ratio (A/B) of the molar amount (A) of barium (Ba) to the molar amount (B) of titanium (Ti) included in the cover portions 112 and 113 is more than 1.05 (1.05 < A/B), there may be a risk that electrical properties such as breakdown voltage (BDV) may be reduced by impeding the densification of the dielectric microstructure and grain growth.

Meanwhile, as the cover portions 112 and 113 include at least one of gallium (Ga) and phosphorus (P), a composition of the second dielectric layer included in the cover portions 112 and 113 may be different from a composition of the first dielectric layer included in the capacitance formation portion Ac.

In other words, the molar amount of gallium (Ga) with respect to 100 moles of titanium (Ti) included in the second dielectric layer may be more than the molar amount of gallium (Ga) with respect to 100 moles of titanium (Ti) included in the first dielectric layer.

Additionally, the molar amount of phosphorus (P) compared to 100 moles of titanium (Ti) included in the second dielectric layer may be more than the molar amount of phosphorus (P) with respect to 100 moles of titanium (Ti) included in the first dielectric layer.

In some example embodiments of the present disclosure, the grain boundaries of the cover portions 112 and 113 may include a region in which the atomic percentage (at%) of gallium (Ga) is 2.0 at% or more, and an upper limit value thereof is not particularly limited, but may be, for example, 4.0 at% or less.

As the grain boundaries of the cover portions 112 and 113 includes a region in which the atomic percentage (at%) of gallium (Ga) is 2.0 at% or more, a sintering temperature may be lowered to reduce the number of pores, so that the densification of the cover portions 112 and 113 may be improved, thereby improving moisture resistance reliability. Additionally, the generation of cracks may be suppressed even when the cover portions 112 and 113 are subjected to external shocks, and thus the mechanical properties may be improved.

Additionally, an average atomic percentage (at%) of gallium (Ga) include in the grain boundaries of the cover portions 112 and 113 may be 0.5 at% or more and 2.0 at% or less.

As the average atomic percentage (at%) of gallium (Ga) included in the grain boundaries of the cover portions 112 and 113 satisfies 0.5 at% or more and 2.0 at% or less, a sintering temperature may be lowered to reduce the number of pores, so that the densification of the cover portions 112 and 113 may be improved, thereby improving moisture resistance reliability. Additionally, the generation of cracks may be suppressed even when the cover portions 112 and 113 are subjected to external shocks, and thus the mechanical properties may be improved.

Here, a method of measuring the atomic percentage (at%) of gallium (Ga) included in the grain boundaries of the cover portions 112 and 113 is not particularly limited, but the EDS analysis method as described above may be used. An EDS analysis position may be confirmed by measuring points of the grain boundaries, or may be obtained using a line-profile, a method of analyzing components of a line drawn in a direction, perpendicular to an actual line shape of the grain boundary disposed between adjacent grains, and the atomic percentage (at%) of gallium (Ga) may be confirmed in the measured line-profile.

Meanwhile, the thickness tc of the cover portions 112 and 113 is not limited.

However, in order to more easily achieve miniaturization and high capacitance of the multilayer electronic component, the thickness tc of the cover portions 112 and 113 may be 100 um or less, preferably 30 um or less, and more preferably 20 um or less in ultra-small products.

Here, the thickness tc of the cover portions 112 and 113 may refer to a first directional size of the cover portions 112 and 113 in the first direction. Additionally, the thickness tc of the cover portions 112 and 113 may refer to the average thickness tc of the cover portions 112 and 113, and may refer to an average size of the cover portions 112 and 113 in the first direction.

The average size of the cover portions 112 and 113 in the first direction may be measured by scanning images of the first and second directional cross-sections of the body 110 with a scanning electron microscope (SEM) of 10,000X magnification. More specifically, the average size thereof may refer to an average value calculated by measuring the first directional size at 10 points equally spaced from each other in the second direction in the image obtained by scanning one cover portion.

Additionally, the average size of the cover portion in the first direction measured by the above-described method may have substantially the same size as the average size of the cover portion in the first direction in the first and third directional cross-sections of the body 110.

Meanwhile, the multilayer electronic component 100 may include side margin portions 114 and 115 disposed on both third directional end-surfaces of the body 110.

More specifically, the side margin portions 114 and 115 may include a first side margin portion 114 disposed on the fifth surface 5 of the body 110 and a second side margin portion 115 disposed on the sixth surface 6 of the body 110.

As illustrated, the side margin portions 114 and 115 may refer to a region between the end-surfaces of the first and second internal electrodes 121 and 122 in the third direction and a boundary surface of the body 110, based on the first and third directional cross-sections of the body 110.

More specifically, the side margin portions 114 and 115 may formed by applying a conductive paste to form the internal electrodes 121 and 122 except where the side margin portions 114 and 115 are to be formed on the ceramic green sheet applied to the capacitance formation portion Ac, and cutting the stacked internal electrodes 121 and 122 so that the internal electrodes 121 and 122 are exposed to the fifth and sixth surfaces 5 and 6 of the body 110 in order to suppress a step portion caused by the internal electrodes 121 and 122, and then stacking a single third dielectric layer 111 or two or more third dielectric layers 111 on both third directional end-surfaces of the capacitance formation portion Ac in the third direction.

As described above, in the present disclosure, the dielectric layer included in the side margin portions 114 and 115 may be defined as a third dielectric layer.

The side margin portions 114 and 115 may basically serve to prevent damage to the internal electrodes 121 and 122 due to physical or chemical stress.

The first side margin portion 114 and the second side margin portion 115 do not include the internal electrodes 121 and 122 and may include the same material as the dielectric layer 111.

That is, the first side margin 114 and the second side margin 115 may include a dielectric material, and may include, for example, a dielectric material based on barium titanate (BaTiO₃). Additionally, as materials included the third dielectric layer, various ceramic additives, organic solvents, binders, dispersants, and the like, may be added to particles such as barium titanate (BaTiO₃) depending on the purpose of the present disclosure.

Additionally, the third dielectric layer included in the side margin portions 114 and 115 may be formed using a dielectric material such as barium titanate (BaTiO₃), and may include a dielectric microstructure after sintering. The dielectric microstructure may include a plurality of grains, grain boundaries disposed between the adjacent grains, and a triple point disposed at a point at which three or more grain boundaries are in contact with each other, each of which may be included in plural.

However, a composition of the third dielectric layer may be different from a composition of the second dielectric layer, and for example, the third dielectric layer included in the side margin portions 114 and 115 may not include gallium (Ga) or phosphorus (P).

Accordingly, the composition of the second dielectric layer included in the cover portions 112 and 113 may be different from the composition of the third dielectric layer included in the side margin portions 114 and 115.

In other words, the molar amount of gallium (Ga) with respect to 100 moles of titanium (Ti) included in the second dielectric layer may be more than the molar amount of gallium (Ga) with respect to 100 moles of titanium (Ti) included in the third dielectric layer.

Additionally, the molar amount of phosphorus (P) with respect to 100 moles of titanium (Ti) included in the second dielectric layer may be more than the molar amount of phosphorus (P) with respect to 100 moles of titanium (Ti) included in the third dielectric layer.

Here, the fact that the third dielectric layer of the side margin portions 114 and 115 does not include gallium (Ga) or phosphorus (P) may denote that the dielectric slurry or dielectric green sheet state does not include gallium (Ga) or phosphorus (P), before sintering the third dielectric layer, or may denote that the third dielectric layer disposed in a central region of the capacitance side margin portions 114 and 115 does not include gallium (Ga) or phosphorus (P).

That is, as gallium (Ga) or phosphorus (P) included in the second dielectric layer of the above-described cover portions 112 and 113 undergoes a sintering process such as high temperature heat treatment, gallium (Ga) or phosphorus (P) may diffuse into a region of the third dielectric layer of the side margin portions 114 and 115 adjacent to the cover portions 112 and 113 among the side margin portions 114 and 115, which may denote that gallium (Ga) or phosphorus (P) may not be detected in the third dielectric layer disposed in a central region of the side margin portions 114 and 115.

For example, based on the first and third directional cross-sections from a second directional center of the multilayer electronic component 100, when a 5 um × 5 um region disposed in first and third directional center portions of the side margins 114 and 115 is observed using an energy dispersive X-ray spectroscopy (EDS) mode of the scanning electron microscope (SEM) or the transmission electron microscope (TEM), this may denote that gallium (Ga) or phosphorus (P) is not detected in the corresponding region, or that gallium (Ga) is detected in an amount of less than 0.5 at% and phosphorus (P) is detected in an amount of less than 0.1 at%.

Meanwhile, a width wm of the first and second side margin portions 114 and 115 is not limited.

However, in order to more easily achieve the miniaturization and the high capacitance of the multilayer electronic component 100, the width wm of the side margin portions 114 and 115 may be 100 um or less, preferably 30 um or less, and more preferably 20 um or less in ultra-small products.

Here, the width wm of the side margin portions 114 and 115 may refer to a third directional size of the side margin portions 114 and 115. Additionally, the width wm of the side margin portions 114 and 115 may refer to the average width wm of the side margin portions 114 and 115, and may refer to an average size of the side margin portions 114 and 115 in the third direction.

The average size of the side margin portions 114 and 115 in the third direction may be measured by scanning images of the first and third directional cross-sections of the body 110 with the scanning electron microscope (SEM) of 10,000X magnification. More specifically, the average size thereof may refer to an average value calculated by measuring a third directional size at 10 points equally spaced from each other in the first direction in an image obtained by scanning one side margin portion.

In some example embodiments of the present disclosure, a structure in which the multilayer electronic component 100 has two external electrodes 131 and 132 is described, but the number or shape of the external electrodes 131 and 132 may be changed depending on the shape of the internal electrodes 121 and 122 or other purposes.

The external electrodes 131 and 132 may be disposed on the body 110 and may be connected to the internal electrodes 121 and 122.

More specifically, the external electrodes 131 and 132 may be disposed on the third and fourth surfaces 3 and 4 of the body 110, respectively, and may include first and second external electrodes 131 and 132 connected to the first and second internal electrodes 121 and 122, respectively. That is, the first external electrode 131 may be disposed on the third surface 3 of the body and may be connected to the first internal electrode 121, and the second external electrode 132 may be disposed on the fourth surface 4 of the body and may be connected to the second internal electrode 122.

Additionally, the external electrodes 131 and 132 may be disposed to extend to a portion of the first and second surfaces 1 and 2 of the body 110, and may also be disposed to extend to a portion of the fifth and sixth surfaces 5 and 6 of the body 110. That is, the first external electrode 131 may be disposed on a portion of the first, second, fifth, and sixth surfaces 1, 2, 5 and 6 of the body 110 and disposed on the third surface 3 of the body 110, and the second external electrode 132 may disposed on a portion of the first, second, fifth and sixth surfaces 1, 2, 5 and 6 of the body 110 and disposed on the third surface 3 of the body 110.

Meanwhile, the external electrodes 131 and 132 may be formed using any material as long as the material has electrical conductivity, such as a metal, and the specific material may be determined in consideration of electrical properties, structural stability, and the like, and the external electrodes 131 and 132 may further have a multilayer structure.

For example, the external electrodes 131 and 132 may include an electrode layer disposed on the body 110 and a plating layer disposed on the electrode layer.

For a more specific example of the electrode layer, the electrode layer may include first electrode layers 131a and 132a, sintering electrodes including a first conductive metal and glass, or may include second electrode layers 131b and 132b, resin-based electrodes including a second conductive metal and resin.

Here, the conductive metal included in the first electrode layers 131a and 132a may be referred to as a first conductive metal, and the conductive metal included in the second electrode layers 131b and 132b may be referred to as a second conductive metal. In this case, the first conductive metal and the second conductive metal may be identical to or different from each other, and when including a plurality of metal materials, at least one metal material may be the same, but the present disclosure is not particularly limited thereto.

Additionally, the electrode layers 131a, 132a, 131b and 132b may be formed by sequentially forming a sintering electrode and a resin-based electrode on the body 110.

Additionally, the electrode layers 131a, 132a, 131b and 132b may be formed by transferring a sheet including a conductive metal onto the body, or may be formed by transferring a sheet including the conductive metal onto the sintering electrode.

The material having excellent electrical conductivity may be used as a conductive metal included in the electrode layers 131a, 132a, 131b and 132b, and for example, the conductive metal may include one or more selected from the group consisting of nickel (Ni), copper (Cu), palladium (Pd), silver (Ag), gold (Au), platinum (Pt), tin (Sn), tungsten (W), titanium (Ti) and alloys thereof, but the present disclosure is not particularly limited thereto.

In some example embodiments of the present disclosure, the electrode layers 131a, 132a, 131b and 132b may have a bilayer structure including first electrode layers 131a and 132a and second electrode layers 131b and 132b, and thus, the external electrodes 131 and 132 may include first electrode layers 131a and 132a including a first conductive metal and glass, and second electrode layers 131b and 132b disposed on the first electrode layers 131a and 132a and including a second conductive metal and resin.

The first electrode layers 131a and 132a may serve to improve adhesion to the body 110 by including glass, and the second electrode layers 131b and 132b may serve to improve bending strength by including a resin.

The first conductive metal used in the first electrode layers 131a and 132a is not particularly limited as long as the first conductive metal has a material that may be electrically connected to the internal electrodes 121 and 122 to form electric capacity, and the first conductive metal may include, for example, one or more selected from the group consisting of nickel (Ni), copper (Cu), palladium (Pd), silver (Ag), gold (Au), platinum (Pt), tin (Sn), tungsten (W), titanium (Ti) and alloys thereof.

The first electrode layers 131a and 132a may be formed by applying a conductive paste prepared by adding glass frit to first conductive metal particles and then sintering the conductive paste.

The second conductive metal included in the second electrode layers 131b and 132b may serve to electrically connect to the first electrode layers 131a and 132a.

The conductive metal included in the second electrode layers 131b and 132b is not particularly limited as long as the conductive metal has a material that may be electrically connected to the electrode layers 131a and 132a, and the conductive metal may include one or more selected from the group consisting of nickel (Ni), copper (Cu), palladium (Pd), silver (Ag), gold (Au), platinum (Pt), tin (Sn), tungsten (W), titanium (Ti) and alloys thereof.

The second conductive metal included in the second electrode layers 131b and 132b may include one or more of spherical particles and flake-shaped particles. That is, the second conductive metal may consist only of flake-shaped particles or only spherical particles, and may be a mixture of flake-shaped particles and spherical particles. Here, the spherical particle may include a shape that is not completely spherical, for example, a shape in which a length ratio of a major axis and a minor axis (major axis/minor axis) is 1.45 or less. The flake-shaped particles may refer to particles with a flat and elongated shape, and the present disclosure is not particularly limited thereto, but the length ratio of the major axis and the minor axis (major axis/minor axis) may be for example, 1.95 or more. The lengths of the major and minor axes of the spherical particles and the flake-shaped particles may be measured from images obtained by scanning first and second directional cross-sections cut from the center portion of the multilayer electronic component in the third direction with a scanning electron microscope (SEM).

The resin included in the second electrode layers 131b and 132b may ensure bonding properties and serve as shock absorbers. The resin included in the second electrode layers 131b and 132b may have bonding properties and shock absorption properties, and the resin is not particularly limited as long as the resin may be mixed with second conductive metal particles to make a paste, and may include, for example, an epoxy-based resin.

Additionally, the second electrode layers 131b and 132b may include a plurality of second conductive metal particles, an intermetallic compound, and a resin. The intermetallic compound may be included to further improve electrical connectivity with the first electrode layers 131a and 132a. The intermetallic compound may serve to improve electrical connectivity by connecting a plurality of metal particles, and may serve to surround the plurality of metal particles and connect the metal particles to each other.

In this case, the intermetallic compound may include a metal having a melting point lower than a curing temperature of the resin. That is, because the intermetallic compound includes the metal having the melting point lower than the curing temperature of the resin, the metal having the melting point lower than the curing temperature of the resin is melted during a drying and curing process, and an intermetallic compound with a portion of the metal particles is formed to surround the metal particle. In this case, the intermetallic compound may preferably include a low melting point metal of 300°C or lower.

For example, the intermetallic compound may include Sn, which has a melting point of 213 to 220°C. Sn is melted during the drying and curing process, and the melted Sn wets high melting point metal particles such as Ag, Ni or Cu through capillary action, and reacts with some of Ag, Ni or Cu metal particles to form intermetallic compounds such as Ag₃Sn, Ni₃Sn₄, Cu₆Sn₅ and Cu₃Sn. Ag, Ni or Cu that did not participate in the reaction remain in the form of metal particles.

Accordingly, the plurality of second conductive metal particles may include one or more of Ag, Ni, and Cu, and the intermetallic compound may include one or more of Ag₃Sn, Ni₃Sn₄, Cu₆Sn₅ and Cu₃Sn.

The plating layers 131c and 132c may serve to improve mounting characteristics.

The types of plating layers 131c and 132c are not particularly limited, and may be a single layer of plating layers 131c and 132c including one or more of nickel (Ni), tin (Sn), silver (Ag), palladium (Pd), and alloys thereof, or may be formed of a plurality of layers.

For more specific examples of the plating layers 131c and 132c, the plating layers 131c and 132c may be Ni plating layers or Sn plating layers, and may be in the form in which a Ni plating layer and a Sn plating layer are sequentially formed on the electrode layer, and may be in the form in which the Sn plating layer, the Ni plating layer, and the Sn plating layer are formed sequentially. Additionally, the plating layers 131c and 132c may include a plurality of Ni plating layers and/or a plurality of Sn plating layers.

There is no need to specifically limit the size of the multilayer electronic component 100.

However, in order to achieve both miniaturization and high capacitance, the thickness of the dielectric layer and internal electrode must be thinned to increase the number of stacked layers, and thus, the effect according to the present disclosure may be more noticeable in the multilayer electronic component 100 having a size of 3216 (length × width: 3.2 mm × 1.6 mm) or less.

Hereinafter, the present disclosure will be described in more detail through examples but this is intended to help the specific understanding of the present disclosure, and the scope of the present disclosure is not limited by an example embodiment.

### <Example Embodiment>

In Comparative Example 1, a multilayer electronic component including a cover portion and a side margin portion was manufactured, and a chip was prepared by manufacturing a multilayer electronic component without adding gallium (Ga) or phosphorus (P) to the cover portion and the side margin portion.

In Inventive Example 1, a chip was prepared by manufacturing a multilayer electronic component in which the molar amount of gallium (Ga) per 100 moles of titanium (Ti) is added to the cover portion in an amount of 0.3 moles or more and 6.0 moles or less, and the molar amount of phosphorus (P) per 100 moles of titanium (Ti) is added to the cover portion in an amount of more than 0 mole and 5.0 moles or less. Except for this, a chip was manufactured in the same manner as a manner of Comparative Example 1.

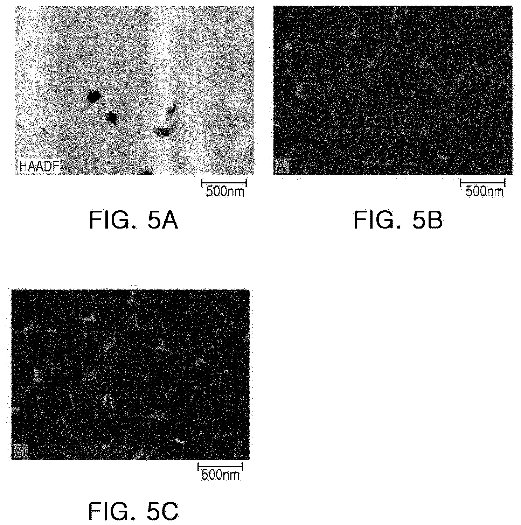

FIG. 5A is an image of first and third directional cross-sections of an upper cover portion of Comparative Example 1 captured in a High-Angle Annular Dark-Field (HAADF) mode of a transmission electron microscope (TEM), FIG. 5B is an image obtained by mapping an aluminum (Al) element by performing EDS analysis in a region of FIG. 5A, and FIG. 5C is an image obtained by mapping a silicon (Si) element by performing the EDS analysis in the region of FIG. 5A.

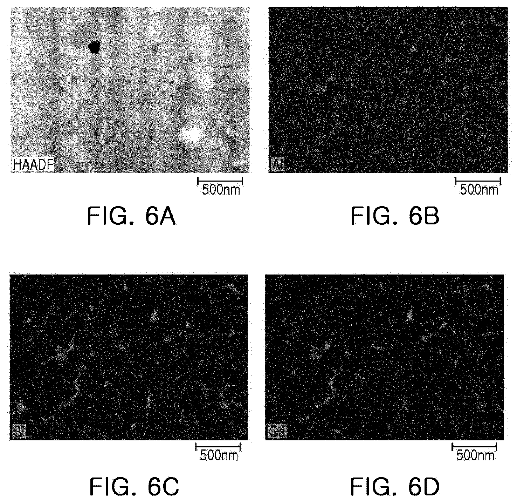

FIG. 6A is an image of first and third directional cross-sections of an upper cover portion of Inventive Example 1 captured in the HAADF mode of the transmission electron microscope (TEM), FIG. 6B is an image obtained by mapping the aluminum (Al) element by performing the EDS analysis in a region of FIG. 6A, FIG. 6C is an image obtained by mapping the silicon (Si) element by performing the EDS analysis in the region of FIG. 6A, and FIG. 6D is an image obtained by mapping a gallium (Ga) element by performing the EDS analysis in the region of FIG. 6A.

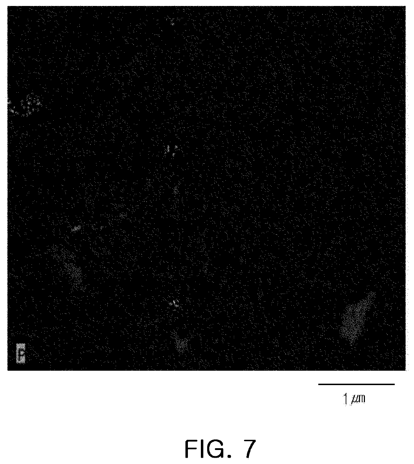

FIG. 7 corresponds to a different region from FIG. 6A, and is an image obtained by capturing an image of first and second directional cross-sections of the upper cover portion of Inventive Example 1 using a transmission electron microscope (TEM), and then performing the EDS analysis to map the phosphorus (P) element.

In Comparative Example 1 and Inventive Example 1, when the cover portion includes gallium (Ga), it may be seen that gallium (Ga) is disposed in the shell portion of the core-shell grain, the interior of the grains, grain boundaries, and a triple point, and since gallium (Ga) is detected together in a region in which silicon (Si) and aluminum (Al) are detected, it may be seen that gallium (Ga) is disposed in a secondary phase including silicon (Si) and aluminum (Al).

Additionally, when the cover portions 112 and 113 include phosphorus (P), it may be seen that phosphorus (P) may be disposed in the shell portion of the core-shell grains, the interior of the grains, the grain boundaries, and the triple point, and that as aggregates in a region in which phosphorus (P), which is predicted to be a secondary phase, has a certain region were observed, phosphorus (P) is arranged in the secondary phase.

Next, in Comparative Example 2 and Comparative Example 3, 28 chips each were manufactured under the same conditions as Comparative Example 1, and in Inventive Examples 2 and 3, 28 chips each were manufactured under the same conditions as Inventive Example 1.

Moisture resistance reliability evaluation was conducted for Comparative Example 2 and Inventive Example 2, and for Comparative Example 3 and Inventive Example 3, Highly Accelerated Life Test (HALT), a reliability evaluation under harsh conditions, was conducted.

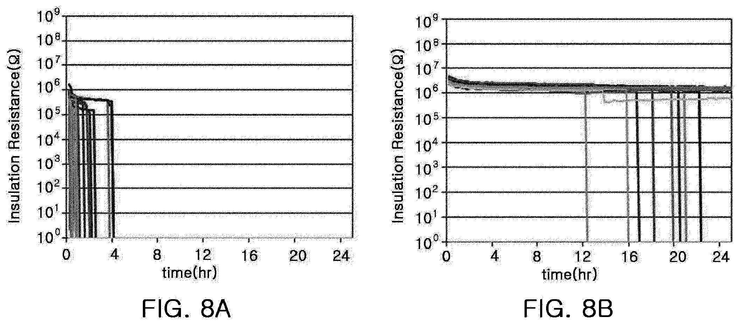

FIG. 8A is a moisture resistance reliability evaluation graph of Comparative Example 2, and FIG. 8B is a moisture resistance reliability evaluation graph of Inventive Example 2.

In the moisture resistance reliability evaluation, when a rated voltage of 1.5 Vr was applied for 26 hours at a temperature condition of 85°C and a relative humidity condition of 85%, a chip in which a short occurred was evaluated as defective.

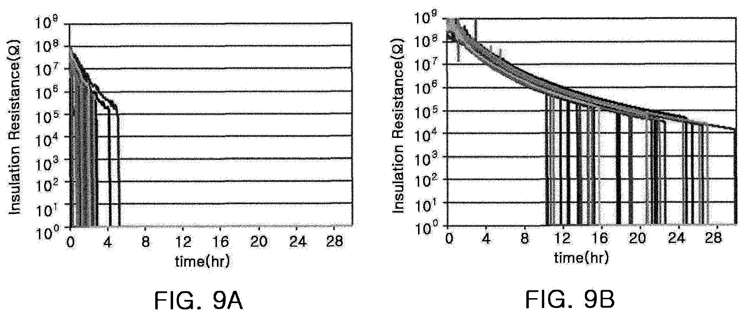

FIG. 9A is a reliability evaluation graph under harsh conditions of Comparative Example 3, and FIG. 9B is a reliability evaluation graph under harsh conditions in Inventive Example 3.

In the HALT evaluation, when a rated voltage of 1.5Vr was applied for 30 hours at a temperature condition of 125°C, the chip in which a short occurred was evaluated as defective, a mean time to failure (MTTF) was obtained by averaging the times when a short occurred.

In Comparative Example 2, a short occurred in all 28 chips whereas in Inventive Example 2, a short occurred in 8 of the 28 chips.

Next, in the case of Comparative Example 3, the mean time to failure (MTTF) was 1.6 hours whereas in Inventive Example 3, the mean time to failure (MTTF) was 16.6 hours, which increased the lifespan by about 10.4 times, as compared to Comparative Example 3.

From this, when the molar amount of gallium (Ga) with respect to 100 moles of titanium (Ti) included in the cover portion is 0.3 moles or more and 6.0 moles or less and the molar amount of phosphorus (P) with respect to 100 moles of titanium (Ti) is more than 0 mole and 5.0 moles or less, it may be seen that the moisture resistance reliability and the mean time to failure (MTTF) are improved.

Next, the content of gallium (Ga) and phosphorus (P) as with respect to 100 moles of titanium (Ti) included in the cover portion was varied and listed in [Table 1] below, and a slurry dispersion, a grain size, a porosity, moisture resistance reliability, and a mean time to failure (MTTF) during the HALT evaluation according to each test example were measured and are listed in [Table 2] below.

In [Table 1], Ga corresponds to the molar amount of gallium with respect to 100 moles of titanium (Ti) included in the cover portion, and P corresponds to the molar amount of phosphorus with respect to 100 moles of titanium (Ti) included in the cover portion. A slurry dispersion degree is indicated as "X" when aggregates occur in a dielectric slurry state, and the slurry dispersion degree is indicated as "O" when no aggregates occur therein.

In [Table 2], the grain size describes an average size of the grains included in a 10 µm × 10 um region of first and third directional cross-sections of the cover portion. The porosity (%) is obtained by calculating an area of pores compared to an area of 15 um × 15 um of the first and third directional cross-sections of the cover portion through a program and then expressing the calculated area as a percentage (%). The moisture resistance reliability is recorded by manufacturing 28 chips for each test example, and then counting the number of chips in which a short occurred, when a rated voltage of 1.5 Vr was applied for 26 hours at a temperature condition of 85°C and a relative humidity condition of 85%. The MTTF is obtained and recorded by manufacturing 28 chips for each test example, and then conducting the HALT evaluation of applying a rated voltage of 1.5Vr for 30 hours at a temperature condition of 125°C, and averaging the times of the chips in which the short occurred.

**[Table 1]**

| Test No. | Ga (mol) | P (mol) | Slurry Dispersion Degree |
|---|---|---|---|
| Test Example 1 | 0 | 0 | ○ |
| Test Example 2 | 0.3 | 0 | ○ |
| Test Example 3 | 0.3 | 0.14 | ○ |
| Test Example 4 | 0.6 | 0 | ○ |
| Test Example 5 | 0.6 | 0.14 | ○ |
| Test Example 6 | 0.9 | 0 | ○ |
| Test Example 7 | 0.9 | 0.14 | ○ |
| Test Example 8 | 3.0 | 0 | ○ |
| Test Example 9 | 3.0 | 0.14 | ○ |
| Test Example 10 | 3.0 | 0.28 | ○ |
| Test Example 11 | 6.0 | 0 | ○ |
| Test Example 12 | 6.0 | 0.14 | ○ |
| Test Example 13 | 6.0 | 0.28 | ○ |
| Test Example 14 | 7.0 | 0.14 | X |
| Test Example 15 | 9.0 | 0.14 | X |

**[Table 2]**

| Test No. | Grain Size (nm) | Porosity (%) | Moisture resistance reliability (piece) | MTTF (hrs) |
|---|---|---|---|---|
| Test Example 1 | 210 | 0.37 | 28 | 1.6 |
| Test Example 2 | 200 | 0.31 | 19 | 13.1 |
| Test Example 3 | 215 | 0.29 | 18 | 13.2 |
| Test Example 4 | 190 | 0.23 | 10 | 15.2 |
| Test Example 5 | 218 | 0.21 | 11 | 15.0 |
| Test Example 6 | 189 | 0.19 | 8 | 16.6 |
| Test Example 7 | 219 | 0.17 | 9 | 16.1 |
| Test Example 8 | 190 | 0.17 | 8 | 16.5 |
| Test Example 9 | 217 | 0.16 | 9 | 16.3 |
| Test Example 10 | 220 | 0.16 | 8 | 16.1 |
| Test Example 11 | 195 | 0.16 | 9 | 15.5 |
| Test Example 12 | 219 | 0.15 | 8 | 15.7 |
| Test Example 13 | 225 | 0.15 | 10 | 15.6 |
| Test Example 14 | 208 | 0.14 | 15 | 10.2 |
| Test Example 15 | 210 | 0.13 | 17 | 7.1 |

When an amount of gallium (Ga) with respect to 100 moles of titanium (Ti) included in the cover portion satisfies 0.3 moles or more and 6.0 moles or less, it may be seen that agglomeration of the dielectric slurry does not occur and moisture resistance reliability and the mean time to failure (MTTF) are improved.

Additionally, when an amount of gallium (Ga) with respect to 100 moles of titanium (Ti) included in the cover portion is 0.3 moles or more and 6.0 moles or less and an amount of phosphorus (P) with respect to 100 moles of titanium (Ti) included in the cover portion is more than 0 mole and 5.0 moles or less, it may be seen that the amount of gallium (Ga) with respect to 100 moles of titanium (Ti) included in the cover portion may be 0.3 moles or more and 6.0 moles or less, which may generally further improve the porosity (%) and moisture resistance reliability compared to the case in which phosphorus (P) is not included.

From this, the molar amount of gallium (Ga) with respect to 100 moles of titanium (Ti) included in the cover portion is 0.3 moles or more and 6.0 moles or less and the molar amount of phosphorus (P) with respect to 100 moles of titanium (Ti) is more than 0 mole and 5.0 moles or less, it may be seen that the moisture resistance reliability and the mean time to failure (MTTF) may be improved.

Next, in the case of varying a ratio (A/B) of the molar amount (A) of barium (Ba) to the molar amount (B) of titanium (Ti) included in the cover portion, the densification of the dielectric microstructure was evaluated and the breakdown voltage (BDV) was measured and listed in Table 3 below.

In test examples in [Table 3], except for changing the ratio of A/B, a chip was manufactured in which the molar amount of gallium (Ga) compared to 100 moles of titanium (Ti) included in the cover portion is 0.3 moles or more and 6.0 moles or less and the molar amount of phosphorus (P) with respect to 100 moles of titanium (Ti) is more than 0 mole and 5.0 moles or less.

The A/B in Table 3 refers to the number (A) of moles of barium (Ba) compared to the number (B) of moles of titanium (Ti) included in the cover portion.

The densification was obtained using a porosity calculation program after observing the porosity (%) of the cover portion with the scanning electron microscope (SEM) and capturing an image thereof, in the first and second directional cross-sections including the cover portion of the chip. When the porosity (%) is 0.30% or less, this was evaluated to be good and recorded as "0," and when the porosity (%) is more than 0.30%, this was evaluated as defective and recorded as "X."

The BDV was obtained by measuring a voltage (V) at which the short occurred when the voltage was raised by increasing the current of 20mA by 1V at 0.17 second intervals using Keithley equipment.

**[Table 3]**

| Test No. | A/B | Densification | BDV (V) |
|---|---|---|---|
| Test Example 16 | 0.99 | ○ | 58.0 |
| Test Example 17 | 1.00 | ○ | 59.14 |
| Test Example 18 | 1.01 | ○ | 62.5 |
| Test Example 19 | 1.02 | ○ | 62.1 |
| Test Example 20 | 1.03 | ○ | 63.2 |
| Test Example 21 | 1.04 | ○ | 60.2 |
| Test Example 22 | 1.05 | ○ | 58.2 |
| Test Example 23 | 1.06 | X | 42.5 |
| Test Example 24 | 1.07 | X | 34.2 |

In Test Examples 16 to 22, the ratio (A/B) of the molar amount (A) of barium (Ba) to the molar amount (B) of titanium (Ti) included in the cover portion satisfied 0.99 or more and 1.05 or less, thereby improving the densification and having excellent breakdown voltage (BDV).

Although the example embodiment of the present disclosure has been described in detail above, the present disclosure is not limited to the above-described embodiments and the accompanying drawings but is defined by the appended claims. Therefore, those of ordinary skill in the art may make various replacements, modifications, or changes without departing from the scope of the present disclosure defined by the appended claims, and these replacements, modifications, or changes should be construed as being included in the scope of the present disclosure.

In addition, the expression 'an example embodiment' used in the present disclosure does not mean the same embodiment, and is provided to emphasize and explain different unique characteristics. However, the embodiments presented above do not preclude being implemented in combination with the features of another embodiment. For example, although items described in a specific embodiment are not described in another embodiment, the items may be understood as a description related to another embodiment unless a description opposite or contradictory to the items is in another embodiment.

In the present disclosure, the terms are merely used to describe a specific embodiment, and are not intended to limit the present disclosure. Singular forms may include plural forms as well unless the context clearly indicates otherwise.

## Claims

1. A multilayer electronic component (100), comprising:
a body (110) including a capacitance formation portion (Ac) including dielectric layers (111) and internal electrodes (121, 122) alternately disposed with the dielectric layer (111) in a first direction, and a cover portion (112, 113) disposed on both end surfaces of the capacitance formation portion (Ac) in the first direction; and
external electrodes (131, 132) disposed on the body (110),
wherein the cover portion (112, 113) includes titanium (Ti), gallium (Ga), and phosphorus (P), and
the cover portion (112, 113) includes 0.3 moles or more and 6.0 moles or less of gallium (Ga) with respect to 100 moles of titanium (Ti).

2. The multilayer electronic component (100) according to claim 1, wherein the cover portion (112, 113) includes more than 0 mole and 5.0 moles or less of phosphorus (P) with respect to 100 moles of titanium (Ti).

3. The multilayer electronic component (100) according to claim 1, wherein the dielectric layer includes: a first dielectric layer (111) in the capacitance formation portion (Ac); and a second dielectric layer in the cover portion (112, 113), and
a composition of the first dielectric layer (111) is different from a composition of the second dielectric layer.

4. The multilayer electronic component (100) according to claim 3, wherein a molar amount of gallium (Ga) with respect to 100 moles of titanium (Ti) included in the second dielectric layer is more than a molar amount of gallium (Ga) with respect to 100 moles of titanium (Ti) included in the first dielectric layer (111).

5. The multilayer electronic component (100) according to claim 3, wherein a molar amount of phosphorus (P) with respect to 100 moles of titanium (Ti) included in the second dielectric layer is more than a molar amount of phosphorus (P) with respect to 100 moles of titanium (Ti) included in the first dielectric layer (111).

6. The multilayer electronic component (100) according to claim 1, wherein the cover portion (112, 113) includes a plurality of grains having a core-shell structure, grain boundaries disposed between adjacent grains, a triple point at which three or more grain boundaries are in contact with each other, and a secondary phase, and
at least one of a shell portion of the core-shell structure, the grain boundary, the triple point, or the secondary phase includes a region in which a content of phosphorus (P) is less than 0.1 at%.

7. The multilayer electronic component (100) according to claim 1, wherein the cover portion (112, 113) further includes barium (Ba), and
a ratio (A/B) of a molar amount (A) of barium (Ba) to a molar amount (B) of titanium (Ti) included in the cover portion (112, 113) satisfies 0.99 ≤ A/B ≤ 1.05.

8. The multilayer electronic component (100) according to claim 1, wherein the body (110) includes first and second surfaces (1, 2) opposing each other in the first direction, third and fourth surfaces (3, 4) connected to the first and second surfaces (1, 2) and opposing each other in a second direction, and fifth and sixth surfaces (5, 6) connected to the first to fourth surfaces (1, 2, 3, 4) and opposing each other in a third direction,
the multilayer electronic component (100) further includes a side margin portion (114, 115) disposed on the fifth and sixth surfaces (5, 6),
the cover portion (112, 113) includes a second dielectric layer,
the side margin portion (114, 115) includes a third dielectric layer,
a composition of the second dielectric layer is different from a composition of the third dielectric layer.

9. The multilayer electronic component (100) according to claim 8, wherein a molar amount of gallium (Ga) with respect to 100 moles of titanium (Ti) included in the second dielectric layer is more than a molar amount of gallium (Ga) with respect to 100 moles of titanium (Ti) included in the third dielectric layer.

10. The multilayer electronic component (100) according to claim 8, wherein a molar amount of phosphorus (P) with respect to 100 moles of titanium (Ti) included in the second dielectric layer is more than a molar amount of phosphorus (P) with respect to 100 moles of titanium (Ti) included in the third dielectric layer.
